# EUROPEAN PATENT APPLICATION

(11) **EP 2 319 292 A1**
(43) Date of publication of application: **11.05.2011**
(21) Application number: 10189798.1
(22) Date of filing: 03.11.2010
(51) Int. Cl.: A01F 25/18

(54) **Machine for filling silo bags**

(30) Priority: 07.11.2009 IT RA20090039
(71) Applicant: Boschi Servizi S.R.L., 48124 Villanova di Ravenna (IT)
(72) Inventor: D'Ascanio, Valerio, 66023, Francavilla al Mare (CH) (IT); Antonellini, Emilio, 48124, San Michele (RA) (IT)
(74) Representative: Roncuzzi, Davide

(57) **Abstract**

Operating machine (1) for filling bags (S) with substantially granular material (M); the machine comprising a frame (10) carried by rotatable moving members (12); a filling unit (20) comprising a hopper (22) supported by the frame (10) and designed so as to receive and contain the material (M); a prismatic member (26) being carried by the frame (10) in a rigidly fixed manner transversally to a given first direction (D) and suitable to be covered by the bag (S) so as to maintain a mouth (B) thereof open; a guiding device (40) being provided in combination with the rotatable moving members (12) so as to direct the prismatic member (26) in a way definable at will; an actuating device (50) being coupled with the rotatable moving members (12) so as to actuate them and to move the prismatic member (26).

## Description

The present invention relates to an operating machine. In particular, the present invention relates to an operating machine for filling bags with granular material.

### BACKGROUND TO THE INVENTION

In the field of granular material preservation, and more in particular of grain preservation, it is well known to replace storage in silos, i.e. large diameter structures with high vertical development, whose construction requires a significant investment, with horizontal storage inside elongated bag-shaped bodies in recyclable plastic material, that are filled using baggers towed by tractors. These machines are designed so as to fill a bag-shaped body gradually, depositing it on free ground, completely without infrastructures. Grains are taken by means of farm machines that cut the bag-shaped body longitudinally and extract from it the desired quantity using an auger. It is clearly apparent that this storage technique minimises the structural costs and requires a minimum investment, compared with the investment associated to the construction of silos and to the maintenance required by these structures to maintain adequate cleanliness and hygiene levels, considering that they may be used, over time, for storing products of different nature.

These machines usually present a frame, provided with a towing front portion, an auger filling device, which is arranged below a hopper, suitable to receive granular material from a feeding member, and is followed by a prismatic member, constituted by a ring-shaped sheet laterally covering the exit mouth of the filling device, so as to support the elongated body of the bag-shaped body while gradually filling it.

Examples of these machines, the so-called "bagging machines" and "Roto Press" machines, can be found respectively in the catalogues of two internationally operating Italian companies, Aldo Annovi S.n.c. and APIESSE S.r.l.

As already mentioned, in both the cases the machines are towed by tractors that move very slowly owing to the need to feed each bag with 250 tonnes of granular material along lengths greater than 50 meters through mouths with a diameter of some meters. The auger of the filling device is actuated by taking driving force from the power take-off of the tractor. These machines therefore requires the use of a tractor, and this tractor must be adequately driven in the identified direction for storing the bag-shaped bodies in order to maximise occupation of the ground without overlapping the adjacent bag-shaped bodies and leaving the surrounding space free for the operations of people filling the bags. This operation requires an operator guiding the tractor very carefully, controlling moment by moment a goniometric device for detecting the "course" of the tractor and consequently acting promptly on the guiding device of the tractor. Alternatively a tractor can be used designed so as to block its guiding device and therefore follow a given direction; or a tractor wherein the guiding system is controlled by a pointing device that can be oriented toward a target arranged in a given position, or a tractor comprising a goniometric device suitable to constrain the guiding system to follow a given "course"; in other cases It is known to follow, with the tractor wheels, a preferably rectilinear trajectory indicated by means of a thread lying on ground. It is easy to understand that, in all the above listed cases, the use of the bagging machine requires using a tractor that must be constantly controlled to tow, actuate and direct the bagging machine, with the result that it is impossible to perform at the same time bagging and other activities requiring the use of a tractor, which is known to be a multi-purpose machine designed to move quickly and to cover many kilometers, so as to adequately earn, due to the high purchasing costs. The tractor must be furthermore provided with highly specialist and very expensive instruments that cannot be easily found as they are poorly used in territories where plots present a limited area and are very fragmentary, and they are therefore hardly usable for normal operations necessary in agriculture. It is easy to understand that these instruments highly increase the costs of the equipment necessary to perform effective grain storage in plastic bags of great dimensions. On the other hand, it is apparent that tractors require dedicated operators able to deal with unexpected operating conditions, and this contributes to increase significantly the storage costs.

In view of the above description, the problem of bagging granular material always having available a tractor used substantially only in combination with an operating machine as that described greatly affects a storage system as that described above, and represent an interesting challenge for the applicant.

In view of the situation described above, it would be desirable to have available a farm machine which, in addition to enabling to limit and possibly to overcome the typical drawbacks of the prior art illustrated above, could define a new standard for these types of machines.

### SUMMARY OF THE PRESENT INVENTION

The present invention relates to an operating machine. In particular, the present invention relates to an operating machine for filling bags with granular material.

The object of the present invention is to provide an operating machine, which allows the disadvantages described above to be solved, which is economical, easy to be maintained and suitable to satisfy a plurality of requirements that to date have still not been addressed, and therefore suitable to represent a new and original source of economic interest, capable of modifying the current market of the bagging machines.

According to the present invention, an operating machine is provided, whose main characteristics will be described in at least one of the appended claims.

### BRIEF DESCRIPTION OF DRAWINGS

Further characteristics and advantages of the operating machine according to the present invention will be more apparent from the description below, set forth with reference to the accompanying drawings, which illustrate at least one non-limiting example of embodiment, in which identical or corresponding parts of the machine are identified by the same reference numbers. In particular:
- figure 1 shows a schematic perspective view of an operating machine according to the present invention;
- figure 2 is an enlarged front view of figure 1;
- figure 3 is a side elevation view of figure 1 in enlarged scale, partially cut away and with some parts removed for the sake of clarity; and
- figure 4 is a schematic view of a device extracted from figure 1, in enlarged scale and with some parts removed from the sake of clarity.

### DETAILED DESCRIPTION OF THE PRESENT INVENTION

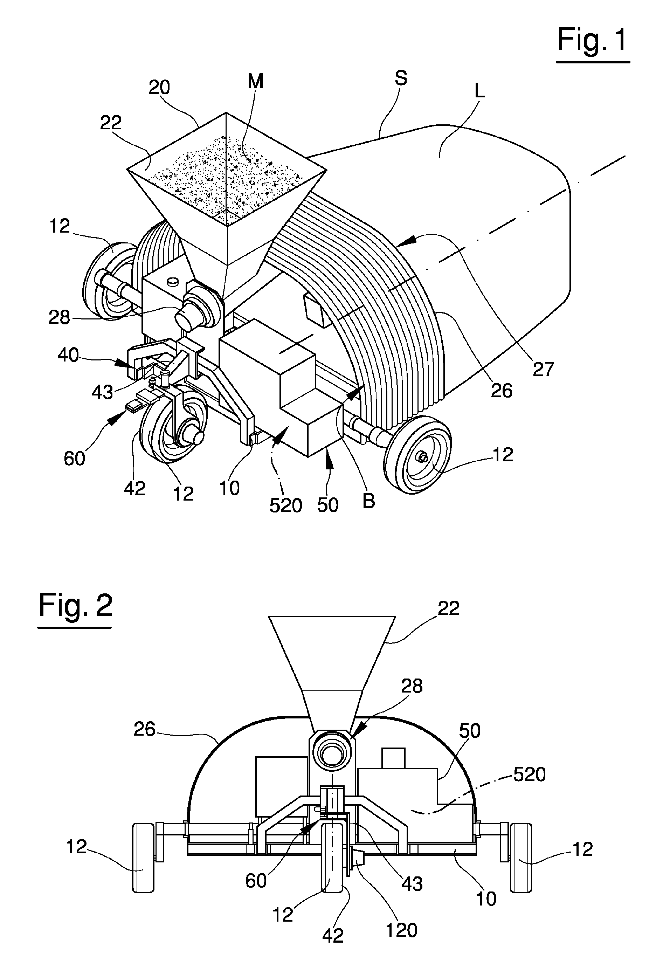

In figures 1 and 2, number 1 indicates, as a whole, an operating machine 1 for filling a bag-shaped body S with substantially granular material M. Each bag-shaped body S presents an elongated body L, delimited by a hermetically sealed end and, at an opposite end, by an inlet mouth B; it is produced in recyclable plastic material and is designed to be laid on ground once it has been filled with the substantially granular material M.

The machine 1 comprises a frame 10 carried by rotatable members, actuated in figures 1 and 2 by means of wheels 12 provided with tyres, without however limiting the scope of the present invention, as these rotatable members could be actuated in other manner, for instance by means of known, and therefore not shown, tracks. The above mentioned rotatable members will be always actuated, hereinafter and in the attached figures, by the wheels 12, just for the sake of practicality and without limiting the scope of the present invention.

The machine 1 furthermore comprises a filling unit 20 supported by the frame 10 and provided with a hopper 22 designed to receive and contain the substantially granular material M, fed in any way. This filling unit 20 comprises a prismatic member 26 obtained through a ring-shaped metal sheet of constant height, extending along a given first direction D to define a feeding channel 27. This prismatic member 26 is carried by the frame 10 in a rigidly fixed manner, and is suitable to support the portion, that shall be still filled, of an elongated body L being filled to maintain the mouth B open. The prismatic member 26 is therefore suitable to be covered by the elongated body L folded around the respective mouth B like a sock to be worn.

With reference to figure 1 and 2 again, the machine 1 comprises a feeding device 28 arranged between the hopper 22 and the prismatic member 26 to fill, in use, the elongated body L with the material M taken from the hopper 22 through the feeding channel 27. The machine 1 furthermore comprises a guiding device 40 associated with the wheels 12 to direct the prismatic member 26 in a manner definable at will, as it will be more apparent from the description below. The machine 1 furthermore comprises an actuating group 50 carried frontally from the frame 10 in figure 1 and coupled to the wheels 12 so as to actuate them in order to move longitudinally the prismatic member 26 and make it self-propelled, and therefore usable without using a tractor or a moving unit of any other kind.

With reference to figures 2 to 4, the machine 1 comprises a control goniometric device 60 connected with the guiding device 40 to align the prismatic member 26 to a given second direction D' definable at will, so as to deposit gradually the bag-shaped body S containing the material M along this given second direction D'. The goniometric control device 60 comprises a measuring unit 62 for instantaneous measurement of the goniometric orientation of the prismatic member 26, and therefore of the given first direction D, and an electronic control unit 64 provided with a memory unit 640 designed for setting geographical parameters of the given second direction D', expressed in any code, for instance compass degrees, by means of a keying device connected to it, comprising a keyboard 644; the control unit 64 furthermore comprises a computing unit 642 suitable to detect constantly an angular displacement between the compass degrees of the given first direction D relative to the compass degrees of the second direction D'. This allows to define, instant by instant, correction values for the current goniometric orientation to be applied to the prismatic member 26 and therefore to the orientation of the given first direction D.

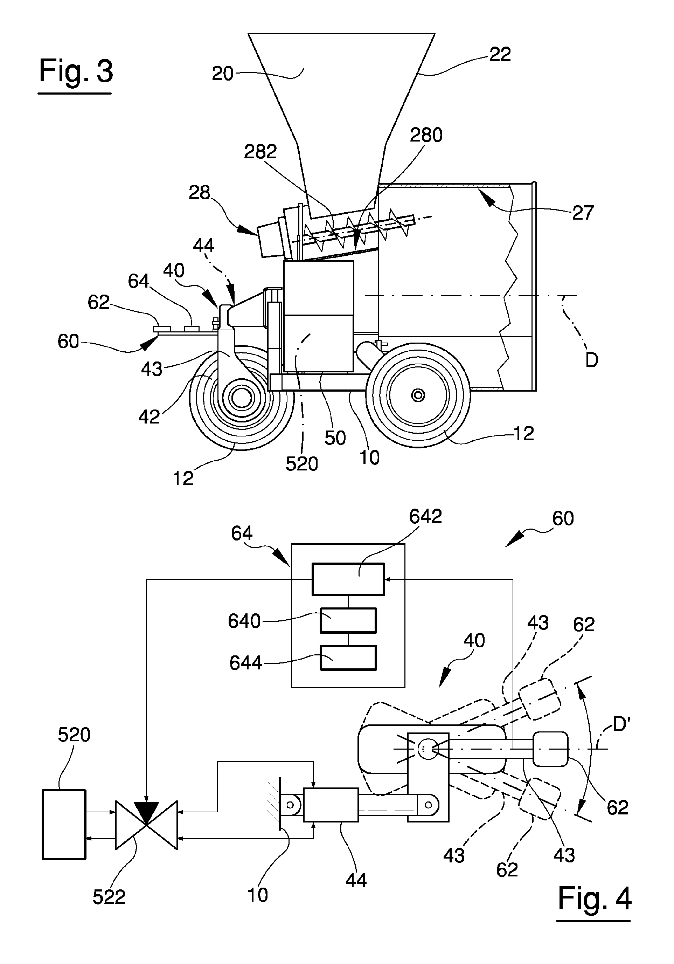

It should be specified that the guiding device 40 comprises a wheel 12 carried by the frame 10 in a freely tiltable manner by means of a fork 43 so as to define a control member 42 and be therefore usable to follow the goniometric orientation of the given second direction D' based upon the operations for calculation the right or left displacement of the fork 43 in figure 4 performed by the electronic control unit 64. The control member 42 therefore allows to direct the prismatic member 26 so as to deposit the elongated body L in the given second direction D'. In this regard, the guiding device 40 comprises a regulating member 44, shown only in figure 4, mechanically interfaced with the fork 43 and controlled by the computing unit 642 to align the wheel 12 of the fork 43 with the given second direction D', thus the control member 42 overall. It should be noted that the control unit 64 and the measuring unit 62 are carried by the fork 43 so that this latter is always directed so as to allow calculating the goniometric correction relative to the given second direction D' and therefore maintaining the machine 1 with the prismatic member oriented in the given second direction D'.

The actuating device 50 comprises an actuating group 52 connected with the regulating member 44 to change, at will, a respective orientation relative to the frame 10 so as to align constantly the prismatic member 26 with the given direction. This actuating group 52 comprises an hydraulic pump 520 electronically connected, in a known manner, to the computing unit 642 through an electronically controlled valve 522 and the regulating member 44 comprises a linear actuator 44 of the hydraulic type. This linear actuator 44 is physically arranged between the frame 10 and the fork 43 to connect them mechanically, and is in hydraulic communication with the hydraulic pump 520 for the respective actuation through the interposition of the electronically controlled valve 522, so as to vary an angular position of the wheel 12/of the control member 42 in coordination with the computing unit 642.

It should be noted that at least one of the wheels 12 is of the motorised type through a rotary actuator 120 coaxial with it and connected to the pump 520 in a known and therefore not shown manner through the interposition of a further electronically controlled valve, known and therefore not shown, so that it can be actuated hydraulically.

Obviously, the feeding device 28 comprises a connecting duct 280 for the connection between the hopper 22 and the prismatic member 26, and contains inside a rotary transport member inside this duct, generally a auger 282 extending from the inside of the hopper 22 to the inside of the prismatic member 26 and whose rotation is controlled by the hydraulic pump 520 in a known and therefore not shown manner.

For the sake of clarity it should be specified that, in order to simplify the attached drawings, the hydraulic connection ducts have not been represented among the components described above, as this representation would have added no useful information for those skilled in the art.

In view of the above description, the use of the machine 1 is easily understood and does not require further explanations.

Lastly, it is apparent that modifications and variants can be made to the operating machine described and illustrated herein, without however departing from the protective scope of the present invention.

In view of the above description it is therefore easily understood that the material M that can be bagged by the operating machine 1 can be of any king and provenance. It is therefore clearly apparent that the operating machine 1 can be used in activities of the agricultural sector, for example, although without limitation, for bagging grains. Therefore each operating machine 1 can be deemed as a farm machine.

## Claims

1. An operating machine (1) for filling a bag-shaped body (S) with substantially granular material (M), said bag-shaped body (S) presenting an elongated body (L) delimited at one end by an inlet mouth (B) and being designed so as to be deposited on ground; said machine comprising a frame (10) carried by rotatable moving means (12); a filling unit (20) comprising a hopper (22) supported by said frame (10) and designed so as to receive and contain said substantially granular material (M); a prismatic member (26) being carried by said frame (10) in a rigidly fixed manner transversally to a given first direction (D) and suitable to be covered by said elongated body (L) so as to maintain said mouth (B) open; feeding means (28) being arranged between said hopper (22) and said prismatic member (26) for filling, in use, said elongated body (L) with said material (M) taken from said hopper (22); guiding means (40) being provided in combination with said rotatable moving means (12) so as to direct said prismatic member (26) in a way definable at will; **characterised by** being provided with respective actuating means (50) carried by said frame (10) and coupled to said rotatable moving means (12) so as to actuate them and to move said prismatic member (26).

2. A machine according to claim 1, **characterised by** comprising goniometric control means (60) connected with said guiding means (40) so as to deposit said bag-shaped body (S) containing said material (M) along a given second direction (D'), which can be defined at will.

3. A machine according to claim 2, **characterised in that** said control means (60) comprise a measuring device (62) for instantaneous measurement of the goniometric orientation of said given first direction (D) and an electronic control unit (64) provided with a memory unit (640) designed for setting said given second direction (D'), and a computing unit (642) suitable to detect an angular displacement between said given second direction (D') and said given first direction (D), so as to define instantaneous correction values for adjusting the current goniometric orientation of said given first direction (D).

4. A machine according to claim 3, **characterised in that** said guiding means (40) comprise a control member (42) carried by said frame (10) in a freely tiltable manner and usable for performing the goniometric orientation of said given second direction (D'); said guiding means (40) further comprising a regulating member (44) interfaced with said control member (42) and with said computing unit (642) so as to align said control member (42) to said second direction (D').

5. A machine according to claim 4, **characterised in that** said actuating means comprise an actuating group (52) connected to said regulating member (44) so as to vary, at will, a respective orientation relative to said frame (10), so as to align constantly said prismatic member (26) to said given direction.

6. A machine according to claim 5, **characterised in that** said actuating group (52) comprises an hydraulic pump (520) and said regulating member (44) comprises a linear actuator (44) of the hydraulic type arranged between said frame (10) and said control member (42) and in hydraulic communication with said hydraulic pump (520) for the respective actuation and to vary an angular position of said control member (42) in coordination with said computing unit (642).

7. A machine according to claim 6, **characterised in that** said rotatable moving means (12) can be actuated hydraulically and are hydraulically connected to said pump (520) for the respective actuation.

8. A machine according to any one of the previous claims, **characterised in that** said feeding means (28) comprise a connecting duct (280) for the connection between said hopper (22) and said prismatic member (26) and a rotary transporting member (282) contained inside said duct (280).
